# EUROPEAN PATENT APPLICATION

(11) **EP 2 993 815 A2**
(43) Date of publication of application: **09.03.2016**
(21) Application number: 15182189.9
(22) Date of filing: 24.08.2015
(51) Int. Cl.: H04H 40/18

(54) **BROADCASTING SIGNAL RECEIVING APPARATUS AND CONTROL METHOD OF THE SAME**

(30) Priority: 03.09.2014 KR 20140116740
(71) Applicant: Samsung Electronics Co., Ltd., Gyeonggi-do 16677 (KR)
(72) Inventor: LEE, Young-jin, Gyeonggi-do (KR)
(74) Representative: Hewett, Jonathan Michael Richard

(57) **Abstract**

Disclosed is a broadcasting signal receiving apparatus and a control method thereof. The broadcasting signal receiving apparatus includes a channel tuner configured to be tuned to for a channel of a broadcasting signal including a digital signal and an analog signal, and receive the broadcasting signal corresponding to the tuned channel; a first signal processor and a second signal processor configured to process the digital signal and the analog signal; a switching section configured to selectively provide one of the broadcasting signals received to one of the first signal processor and the second signal processor; and a controller configured to control the switching section to respectively provide the digital signal to the first signal processor and the analog signal to the second signal processor based on a property of the received broadcasting signal.

## Description

The present invention relates to a broadcasting signal receiving apparatus and a control method thereof, and more particularly to a broadcasting signal receiving apparatus capable of processing a broadcasting signal that may include both digital and analog broadcasting signals, and a control method thereof.

A broadcasting signal receiving apparatus tunes to a channel for receiving a broadcasting signal and processes the broadcasting signal of the tuned channel as an image, thereby outputting the processed broadcasting signal to a display apparatus. As a broadcasting signal is provided in the form of a digital broadcasting signal, a high-speed digital tuner has been developed to process the digital broadcasting signal having a constant amplitude, and is thus unsuitable to process an analog broadcasting signal.

By the way, there may be a broadcasting signal in which most of the broadcasting signals are digital, but some of the broadcasting signals include one or more analog signals. Accordingly, there is a need of a broadcasting signal receiving apparatus capable of processing such an analog broadcasting signal included in a broadcasting signal and transmitting the processed broadcasting signal to a display apparatus.

Aspects of one or more exemplary embodiments of the present invention aim to solve the foregoing problems of a broadcasting signal receiving apparatus, and one or more exemplary embodiments may provide a broadcasting signal receiving apparatus and a control method thereof, which can process a broadcasting signal even though a broadcasting signal includes an analog broadcasting signal, and transmit the processed broadcasting signal to a display apparatus.

According to an aspect of the present invention, there is provided a broadcasting signal receiving apparatus including: a channel tuner configured to be tuned to for a channel of a broadcasting signal comprising a digital signal and an analog signal, and receive the broadcasting signal corresponding to the tuned channel; a first signal processor configured to process the digital signal; a second signal processor configured to process the analog signal; a switching section configured to selectively provide the digital signal to the first signal processor and the analog signal to the second signal processor; and a controller configured to, based on a property of the received broadcasting signal, control the switching section to selectively provide the digital signal to the first signal processor and the analog signal to the second signal processor.

The property of the broadcasting signal may include an amplitude of the broadcasting signal. If the broadcasting signal is converted by a fast Fourier transform (FFT) by way of example, it is possible to determine the amplitude of the broadcasting signal and therefore the property of the broadcasting signal is easily determined by a simple means.

The controller may be further configured to determine whether an amplitude change of the received broadcasting signal is equal to or greater than a predetermined value. Thus, only a means for determining an amplitude change of a broadcasting signal within a predetermined section is required to determine both a digital broadcasting signal having a constant amplitude within the predetermined section and an analog broadcasting signal having a variable amplitude within the predetermined section.

The controller may be further configured to: in response to the amplitude change of the received broadcasting signal being equal to or greater than the predetermined value, control the switching section to provide the analog signal to the second signal processor, and in response to the amplitude change of the received broadcasting signal within the predetermined section being less than the predetermined value, control the switching section to provide the digital signal to the first signal processor.

The controller may be further configured to determine whether a uniformity of the received broadcasting signal is equal to or greater than a predetermined value. As the distribution uniformity of the received broadcasting signal is determined, it is easy to determine a digital broadcasting signal having a dense distribution and an analog broadcasting signal having a loose distribution.

The controller may be further configured to: in response to the uniformity of the received broadcasting signal being equal to or greater than the predetermined value, control the switching section to provide the digital signal to the first signal processor, and in response to the uniformity of the received broadcasting signal being less than the predetermined value, control the switching section to provide the analog signal to the second signal processor.

The broadcasting signal receiving apparatus may further include: an analog-digital converter configured to convert the received broadcasting signal.

The broadcasting signal receiving apparatus may further include: a first demodulator configured to demodulate the received digital signal; and a second demodulator configured to demodulate the received analog signal.

The controller may be further configured to determine whether a width variability of the received broadcasting signal is equal to or greater than a predetermined value.

The controller may be further configured to: in response to the width variability of the received broadcasting signal being equal to or greater than the predetermined value, control the switching section to provide the analog signal to the second demodulator, and in response to the uniformity of the received broadcasting signal being less than the predetermined value, control the switching section to provide the digital signal to the first demodulator.

The controller may be further configured to provide a transport stream processed by the first demodulator to the first signal processor, and provide a composite video blanking sync or source input format broadcasting signal processed by the second demodulator to the second signal processor.

According to another aspect of the present invention, there is provided a method of controlling a broadcasting signal receiving apparatus, the method including: tuning to a channel of a broadcasting signal comprising a digital signal and an analog signal, and receiving the broadcasting signal corresponding to the tuned channel; providing the digital signal to the first signal processor and providing the analog signal to the second signal processor, based on a property of the received broadcasting signal; and processing the digital signal and the analog signal.

The properties of the broadcasting signal may include an amplitude of the broadcasting signal.

The providing the broadcasting signal may include determining whether an amplitude change of the received broadcasting signal is equal to or greater than a predetermined value.

The providing the broadcasting signal may include determining whether a uniformity of the received broadcasting signal is equal to or greater than a predetermined value.

The method may include converting the received broadcasting signal through an analog-digital converter.

The method may include demodulating the received digital signal and analog signal.

A transport stream demodulated from the digital signal may be transmitted to the first signal processor, and a composite video blanking sync or source input format broadcasting signal demodulated from the analog signal may be transmitted to the second signal processor.

According to another aspect of the present invention, there is provided a broadcast receiving signal apparatus including: a controller configured to: analyze a property of a received broadcasting signal comprising a digital signal and an analog signal; and based on the property of received broadcasting signal, provide the digital signal to a first signal processor or provide the analog signal to the second processor.

The property of the broadcasting signal may include an amplitude of the broadcasting signal; and the controller may be further configured to: in response to determining the received broadcasting signal has an amplitude change less than a first predetermined number and a uniformity equal to or greater than a second predetermined value, provide the digital signal to the first signal processor; and in response to determining the received broadcasting signal has an amplitude change equal to or greater than the first predetermined number or a uniformity less than the second predetermined value, provide the analog signal to the second signal processor.

The above and/or other aspects will become apparent and more readily appreciated from the following description of one or more exemplary embodiments, taken in conjunction with the accompanying drawings, in which:
FIG. 1 is a block diagram illustrating a broadcasting signal receiving apparatus according to an exemplary embodiment;
FIG. 2 is a block diagram illustrating a broadcasting signal receiving apparatus according to an exemplary embodiment;
FIG. 3 is a control flowchart illustrating operations of a broadcasting signal receiving apparatus according to an exemplary embodiment;
FIG. 4 is a control flowchart illustrating operations of a broadcasting signal receiving apparatus according to an exemplary embodiment;
FIG. 5 is a graph illustrating a first broadcasting signal and a second broadcasting signal received in a broadcasting signal receiving apparatus according to an exemplary embodiment;
FIG. 6 is a control flowchart illustrating a determining of the first and second received broadcasting signals based on the graph of FIG. 5;
FIG. 7 is a graph illustrating a first broadcasting signal and a second broadcasting signal received in a broadcasting signal receiving apparatus according to another exemplary embodiment; and
FIG. 8 is a control flowchart illustrating a determining of the first and second received broadcasting signals based on the graph of FIG. 7.

Below, one or more exemplary embodiments will be described in detail with reference to accompanying drawings. The present invention may be achieved in various forms and is not limited to the following exemplary embodiments. For convenience of description, parts not directly related to the present invention may be omitted from the disclosure, and like numerals refer to like elements throughout.

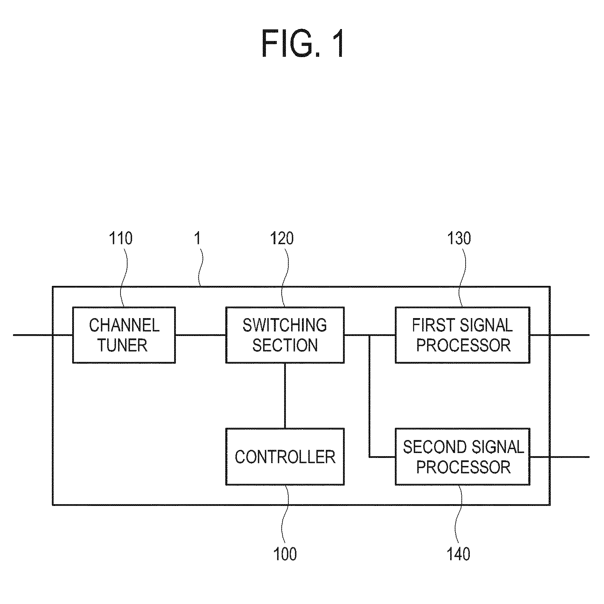

FIG. 1 is a block diagram illustrating a broadcasting signal receiving apparatus 1 according to an exemplary embodiment. According to an exemplary embodiment, the broadcasting signal receiving apparatus 1 may be achieved by a set-top box, a display apparatus 10, a user terminal, etc. The broadcasting signal receiving apparatus 1 according to an exemplary embodiment may include a channel tuner 110, a switching section 120, a first signal processor 130, a second signal processor 140 and a controller 100.

The channel tuner 110 may perform tuning to select and classify received broadcasting signals in accordance with channels. The tuned channel may be output at an intermediate frequency (IF). The channel tuner 110 is tuned to one channel among a plurality of channels for a broadcasting signal including a first broadcasting signal and a second broadcasting signal, each with different properties, and thus receives a broadcasting signal corresponding to the tuned channel.

The switching section 120 may selectively provide one of the broadcasting signals received under control of the controller 100 to one of the first signal processor 130 and the second signal processor 140. The switching section 120 may perform switching so that the first broadcasting signal can be transmitted to the first signal processor 130 and the second broadcasting signal can be transmitted to the second signal processor 140.

There is no limit to the kinds of image processing that may be performed in the first signal processor 130 and the second signal processor 140. For example, the image processing may include de-multiplexing for dividing a predetermined signal into signals corresponding to characteristics, decoding corresponding to a format of an image signal, de-interlacing for converting an interlaced type of an image signal into a progressive type, noise reduction for improving quality of an image, detail enhancement, frame refresh rate conversion, motion compensation, aspect ratio control, edge enhancement, color calibration, etc. Meanwhile, there may be provided a decoder for decoding a source image corresponding to a format of an encoded source image, and a frame buffer for storing the decoded source image in units of frame.

The first signal processor 130 and the second signal processor 140 may be achieved by a system-on-chip (SOC) in which various functions are integrated, or as individual elements for independently performing processes. They may also be internally mounted to the broadcasting signal receiving apparatus 1 as an image processing board.

The first signal processor 130 and the second signal processor 140 may perform various preset image processing processes with respect to a broadcasting signal, an image signal received from the receiver, and a source image including an image signal received from an image source. The first signal processor 130 and the second signal processor 140 may output the processed image signal to the display apparatus 10, so that the processed source image can be displayed on the display apparatus 10.

The first signal processor 130 can process the first broadcasting signal transmitted by the switching section 120 as described above. Likewise, the second signal processor 140 can process the second broadcasting signal transmitted by the switching section 120.

The controller 100 may control general devices in the broadcasting signal receiving apparatus 1. The controller 100 may control the switching section 120 so that the first broadcasting signal and the second broadcasting signal can be transmitted to the first signal processor 130 and the second signal processor 140, respectively, based on the properties of the received broadcasting signal.

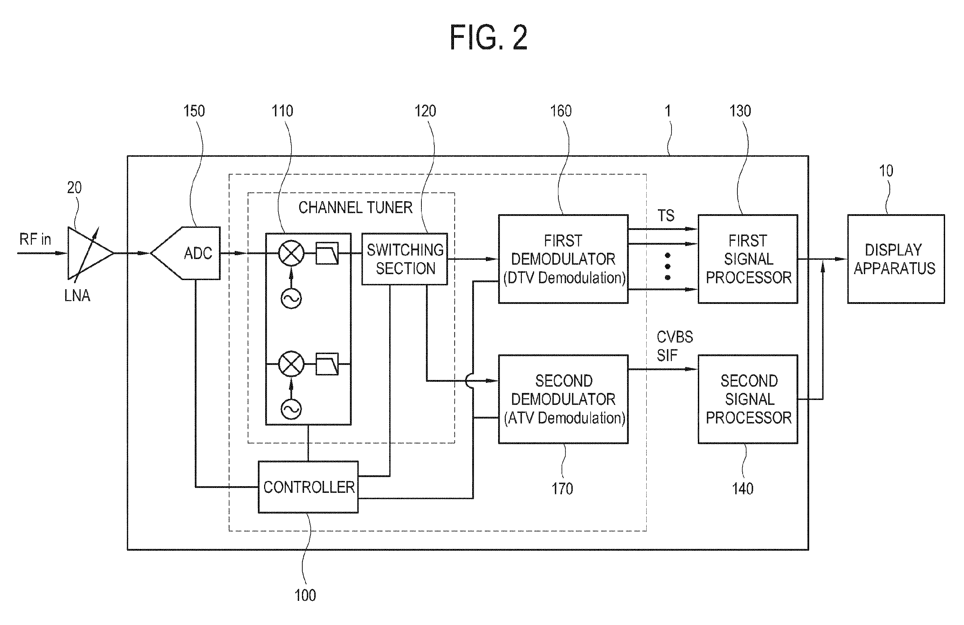

FIG. 2 is a block diagram of a broadcasting signal receiving apparatus according to an exemplary embodiment. According to an exemplary embodiment, the broadcasting signal receiving apparatus 1 may include all the elements shown in FIG. 1, and may further include an analog-digital converter 150 (ADC), a first demodulator 160, a second demodulator 170, and a low noise amplifier 20 (LNA).

The ADC 150 is a signal converting block for converting an analog signal into a digital signal, which may be called a 'signal converter.' Unlike a digital signal, an analog signal has properties of variable amplitudes and does not have a regular pattern. Thus, the ADC 150 (i.e., the signal converter) may convert the analog signal into a form similar to a digital signal so as to be easily processed.

The first demodulator 160 may demodulate the first broadcasting signal, i.e., a digital broadcasting signal. A transport stream (TS) obtained by converting and demodulating an intermediate frequency (IF) signal of a tuned channel may be output to the first signal processor 130.

The second demodulator 170 may output a broadcasting signal of composite video blanking sync (CVBS) or a broadcasting signal of a source input format, which is demodulated by converting an IF signal of a tuned channel with regard to the second broadcasting signal, i.e. the analog broadcasting signal, to the second signal processor 140.

The LNA 20 (i.e., the amplifier) may receive and amplify a receivable broadcasting signal (radio frequency). The LNA 20 may transmit the amplified broadcasting signal to the ADC 150. The LNA 20 may be included in the broadcasting signal receiving apparatus 1 or may be externally provided.

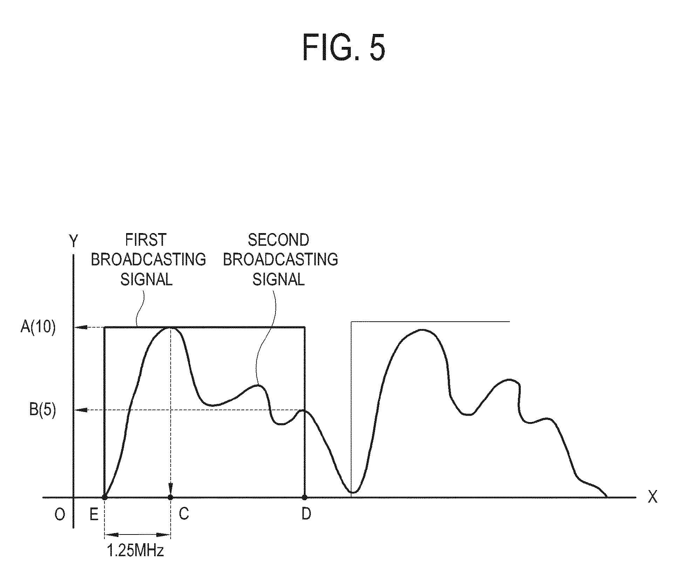

The properties of the broadcasting signal include the amplitude of the broadcasting signal. FIG. 5 is a graph showing a broadcasting signal according to an exemplary embodiment. As shown in FIG. 5, the broadcasting signal may include the first broadcasting signal (i.e. the digital broadcasting signal) and the second broadcasting signal (i.e. the analog broadcasting signal). As shown in FIG. 5, the first broadcasting signal and the second broadcasting signal may have different properties such as amplitude (or a level), cycle, etc. The first broadcasting signal and the second broadcasting signal may be differentiated from each other with regard to whether their properties are regular or not. For example, the first broadcasting signal may have a regular or constant amplitude, but the second broadcasting signal may have an irregular amplitude. When fast Fourier transforms are respectively applied to the first broadcasting signal and the second broadcasting signal, an X-axis indicates a frequency and a Y-axis indicates an amplitude at a frequency.

In order to determine whether the properties of the first broadcasting signal and the second broadcasting signal are regular, the controller 100 may for example determine whether a level change of a received broadcasting signal within a predetermined section is equal to or greater than a predetermined value. As shown in FIG. 5, the first broadcasting signal has a regular form as a digital signal, but the second broadcasting signal has an analog broadcasting signal. Specifically, the digital broadcasting signal has a regular amplitude (or level) of A in a section among points of E, C and D on the X-axis, and thus its level change is less than a predetermined value. On the other hand, the analog broadcasting signal has a variable amplitude (or level) of o, A and B in the corresponding section (points E, C, and D) on the X-axis, and thus its level change is equal to or greater than a predetermined value. For instance, if a predetermined value for the level change of the received broadcasting signal is set to '3', the level change (A-B) of the second broadcasting signal is '5' and thus greater than a predetermined value as shown in FIG. 5. In this case, the second broadcasting signal is determined as the analog broadcasting signal.

Further, in order to determine whether the properties of the first broadcasting signal and the second broadcasting signal are regular, the controller 100 may for example determine whether the uniformity of the received broadcasting signal is equal to or greater than a predetermined value. The controller 100 determines the distribution of the broadcasting signal and thus determines whether the distribution is uniform. If the uniformity of the broadcasting signal is equal to or greater than a predetermined value, the controller 100 determines the broadcasting signal as the digital broadcasting signal. On the other hand, if the uniformity is less than a predetermined value, the broadcasting signal is determined as the analog broadcasting signal.

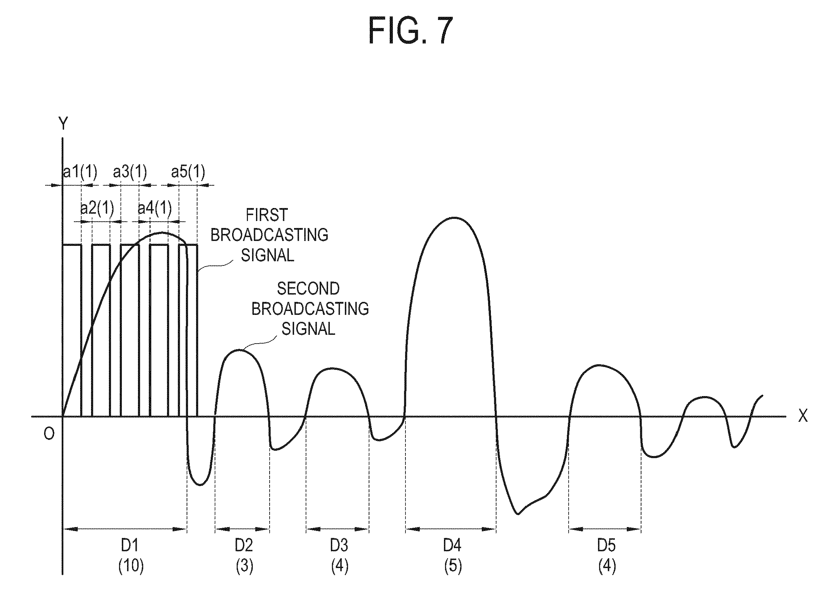

FIG. 7 is a graph showing a first broadcasting signal and a second broadcasting signal received in a broadcasting signal receiving apparatus according to another exemplary embodiment. The digital broadcasting signal (i.e., the first broadcasting signal) has widths (i.e., duties) of a1 to a5 of which the difference between the maximum value (MAX.) and the minimum value (MIN.) is constant without change, and thus has a width variability less than a predetermined value. On the other hand, the analog broadcasting signal (i.e., the second broadcasting signal) has widths (i.e. duties) of D1 to D5 of which the maximum value (MAX.) - the minimum value (MIN.) is variable, and thus has a width variability equal to or greater than a predetermined value. For instance, if a predetermined value for the width variability of the received broadcasting signal is set to '3', the change values (MAX. - MIN.) of the second broadcasting signal is '7' and thus greater than a predetermined value. In this case, the second broadcasting signal is determined as the analog broadcasting signal. In the foregoing exemplary embodiment, the width (i.e. the duty) of the broadcasting signal is used to determine the width variability of the broadcasting signal, but it is just an example. For example, cycles or other properties of the broadcasting signal may be used.

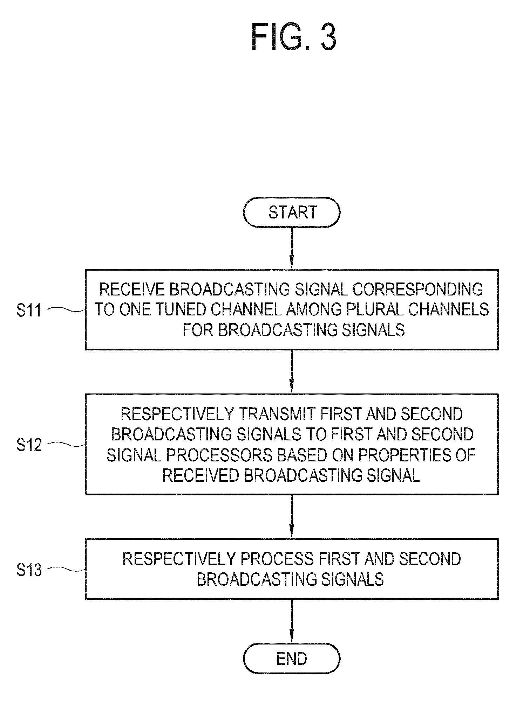

FIG. 3 is a control flowchart showing operations of a broadcasting signal receiving apparatus 1 according to an exemplary embodiment. One channel among a plurality of channels is selected for a broadcasting signal including a first broadcasting signal and a second broadcasting signal, each with different properties, and the broadcasting signal corresponding to the selected channel is received (S11).

Based on the properties of the broadcasting signal, the first broadcasting signal and the second broadcasting signal are respectively transmitted to the first signal processor 130 and the second signal processor 140 (S12).

The first signal processor 130 processes the first broadcasting signal, and the second signal processor 140 processes the second broadcasting signal (S13).

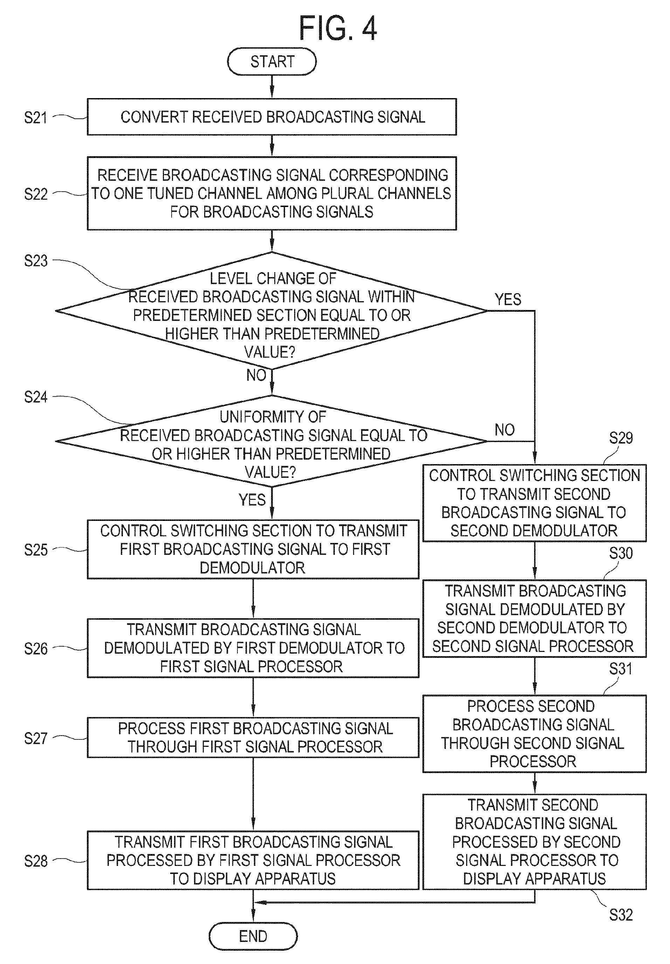

FIG. 4 is a control flowchart showing operations of a broadcasting signal receiving apparatus according to an exemplary embodiment.

The received broadcasting signal is converted into a digital signal (S21).

The broadcasting signal is received corresponding to one channel selected among the plurality of channels for the broadcasting signals (S22).

It is determined whether the level change of the received broadcasting signal within a predetermined section is equal to or greater than a predetermined value (S23).

If it is determined that the level change is less than a predetermined value in the operation S23, then it is determined whether the uniformity of the received broadcasting signal is equal to or greater than a predetermined value (S24).

If it is determined in the operation S24 that the uniformity is equal to or greater than a predetermined value, the switching section 120 is controlled to transmit the first broadcasting signal to the first demodulator 160 (S25).

The broadcasting signal demodulated by the first demodulator 160 is transmitted to the first signal processor 130 (S26).

The first broadcasting signal is processed by the first signal processor 130 (S27).

The first broadcasting signal processed by the first signal processor 130 is transmitted to the display apparatus 10 (S28).

If it is determined in the operation S23 that the level change is equal to or greater than a predetermined value, or if it is determined in the operation S24 that the uniformity is less than a predetermined value, the received broadcasting signal is determined as an analog broadcasting signal and therefore the switching section 120 is controlled to transmit the second broadcasting signal to the second demodulator 170(S29).

The broadcasting signal demodulated by the second demodulator 170 is transmitted to the second signal processor 140 (S30).

The second broadcasting signal is processed by the second signal processor 140 (S31).

The second broadcasting signal processed by the second signal processor 140 is transmitted to the display apparatus 10 (S32).

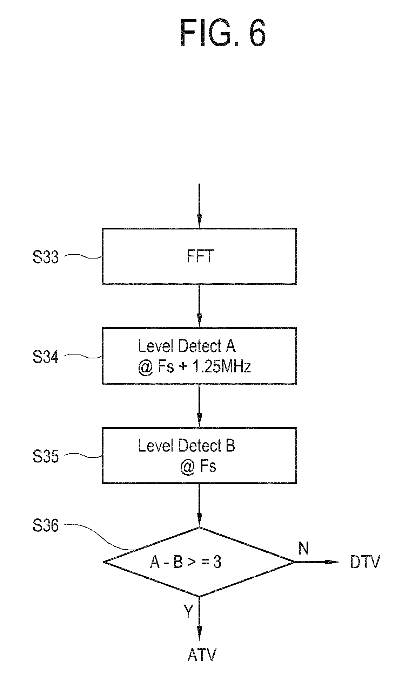

FIG. 6 is a control flowchart of determining the first and second received broadcasting signals based on the graph of FIG. 5.

The received first and second broadcasting signals are processed by fast Fourier transform (FFT) (S33).

At the point of C (i.e. the rightward point from the point of E by 1.25Mhz) on the X-axis, where the amplitudes (vertical values) of the broadcasting signal are the same, the value of A (the amplitude of the broadcasting signal) on the Y-axis is determined (S34).

At the point of D on the X-axis within a predetermined section of the first broadcasting signal, the value of B on the Y-axis is determined (S35).

At operation S36, if a difference between the value of A (e.g., '10') determined in the operation S34 and the value of B (e.g., '5') determined in the operation S35 is equal to or greater than a predetermined value (e.g., '3'), the broadcasting signal is determined as an analog broadcasting signal. Thus, the controller 100 controls the switching section 120 to transmit the second broadcasting signal determined as the analog broadcasting signal to the second demodulator 170.

At operation S36, if difference between the value of A (e.g., '10') determined in the operation S34 and the value of B (e.g., '10') determined in the operation S35 is less than a predetermined value (e.g., '3'), the broadcasting signal is determined as a digital broadcasting signal. Thus, the controller 100 controls the switching section 120 to transmit the first broadcasting signal determined as the digital broadcasting signal to the first demodulator 160.

Accordingly, the first broadcasting signal and the second broadcasting signal are respectively demodulated and processed as images to be displayed on the display apparatus 10.

FIG. 7 is a graph showing fast Fourier transform (FFT) for determining whether the properties of the received first and second broadcasting signals are regular or irregular, in the broadcasting signal receiving apparatus 1 according to another exemplary embodiment. In the graph to which the FFT is applied, the digital broadcasting signal and the analog broadcasting signal may be different in the amplitude (a level or a vertical value) and the width (a duty or a horizontal value) as shown in FIG. 5. The digital broadcasting signal has widths (i.e. duties) of a1 to a5 of which the maximum value (MAX.) - the minimum value (MIN.) is constant without change, and thus has a width variability less than a predetermined value. On the other hand, the analog broadcasting signal has widths (i.e. duties) of D1 to D5 of which the maximum value (MAX.) - the minimum value (MIN.) is variable, and thus has a width variability equal to or greater than a predetermined value. For instance, if a predetermined value for the width variability of the received broadcasting signal is set to '3', the change values(MAX. - MIN.) of the second broadcasting signal is '7' and thus greater than a predetermined value. In this case, the second broadcasting signal is determined as the analog broadcasting signal.

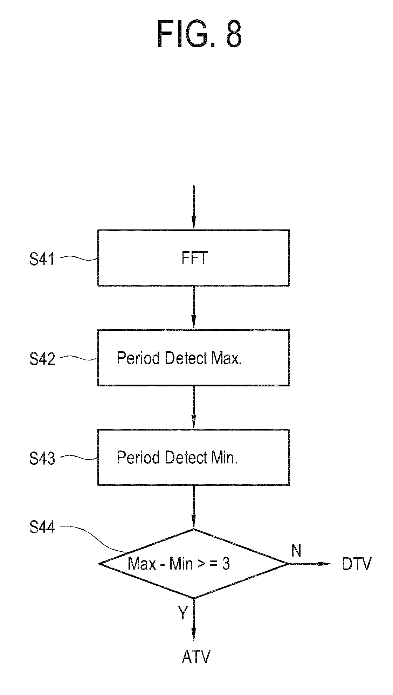

FIG. 8 is a control flowchart of determining the first and second received broadcasting signals based on the graph of FIG. 7.

The received first and second broadcasting signals are processed by fast Fourier transform (FFT) (S41).

In the FFT graph, the largest width (or duty) is determined among the widths (or duties) of the broadcasting signal (S42).

In the FFT graph, the smallest width (or duty) is determined among the widths (or duties) of the broadcasting signal (S43).

If a difference between the MAX. value (e.g., '10') determined in the operation S42 and the MIN. value (e.g., '3') determined in the operation S43 is equal to or greater than a predetermined value (e.g., '3'), the broadcasting signal is determined as the analog broadcasting signal (S44). In this case, because a difference (e.g., '7') is greater than a predetermined value (e.g., 3), the controller 100 controls the switching section 120 to transmit the second broadcasting signal determined as the analog broadcasting signal to the second demodulator 170.

If difference between the MAX. value (e.g., '1') determined in the operation S42 and the MIN. value (e.g., '1') determined in the operation S43 is less than a predetermined value (e.g., '3'), the broadcasting signal is determined as the digital broadcasting signal (S44). In this case, because a difference (e.g. 'o') is less than a predetermined value (e.g., 3), the controller 100 controls the switching section 120 to transmit the first broadcasting signal determined as the digital broadcasting signal to the first demodulator 160.

Accordingly, the first broadcasting signal and the second broadcasting signal are respectively demodulated and processed as images to be displayed on the display apparatus 10.

Even if a broadcasting signal includes an analog broadcasting signal, the broadcasting signal receiving apparatus 1 according to an exemplary embodiment can determine whether the received broadcasting signal has properties of an analog broadcasting signal or a digital broadcasting signal. The first broadcasting signal determined as the digital broadcasting signal is transmitted to the first demodulator 160 and the first signal processor 130, and the second broadcasting signal determined as the analog broadcasting signal is transmitted to the second demodulator 170 and the second signal processor 140. Thus, both the digital broadcasting signal and the analog broadcasting signal are all displayable on the display apparatus 10.

According to an exemplary embodiment, even though a broadcasting signal includes an analog broadcasting signal, a first broadcasting signal and a second broadcasting signal are respectively transmitted to a first signal processor and a second signal processor based on the properties of the received broadcasting signal, thereby having an effect on processing the analog broadcasting signal.

Although a few exemplary embodiments have been shown and described, it will be appreciated by those skilled in the art that changes may be made in these exemplary embodiments without departing from the invention. Therefore, the foregoing should be considered as illustrative only. Additionally, while an exemplary predetermined value of '3' has been used throughout the disclosure, the predetermined value is not limited to a value of '3'. The scope of the invention is defined in the appended claims. Accordingly, all suitable modification and equivalents may fall within the scope of the invention.

## Claims

1. A broadcasting signal receiving apparatus comprising:
a channel tuner configured to be tuned to a channel of a broadcasting signal comprising a digital signal and an analog signal, and receive the broadcasting signal corresponding to the tuned channel;
a first signal processor configured to process the digital signal;
a second signal processor configured to process the analog signal;
a switching section configured to selectively provide the digital signal to the first signal processor and the analog signal to the second signal processor; and
a controller configured to, based on a property of the received broadcasting signal, control the switching section to selectively provide the digital signal to the first signal processor and the analog signal to the second signal processor.

2. The broadcasting signal receiving apparatus according to claim 1, wherein the property of the broadcasting signal comprises an amplitude of the broadcasting signal.

3. The broadcasting signal receiving apparatus according to claim 1 or 2, wherein the controller is further configured to determine whether an amplitude change of the received broadcasting signal is equal to or greater than a predetermined value.

4. The broadcasting signal receiving apparatus according to one of claim 1 to 3, wherein the controller is further configured to:
in response to the amplitude change of the received broadcasting signal being equal to or greater than the predetermined value, control the switching section to provide the analog signal to the second signal processor, and
in response to the amplitude change of the received broadcasting signal within the predetermined section being less than the predetermined value, control the switching section to provide the digital signal to the first signal processor.

5. The broadcasting signal receiving apparatus according to one of claim 1 to 4, wherein the controller is further configured to determine whether a uniformity of the received broadcasting signal is equal to or greater than a predetermined value.

6. The broadcasting signal receiving apparatus according to one of claim 1 to 5, wherein the controller is further configured to:
in response to the uniformity of the received broadcasting signal being equal to or greater than the predetermined value, control the switching section to provide the digital signal to the first signal processor, and
in response to the uniformity of the received broadcasting signal being less than the predetermined value, control the switching section to provide the analog signal to the second signal processor.

7. The broadcasting signal receiving apparatus according to one of claim 1 to 6, further comprising:
an analog-digital converter configured to convert the received broadcasting signal.

8. The broadcasting signal receiving apparatus according to one of claim 1 to 7, further comprising:
a first demodulator configured to demodulate the received digital signal; and
a second demodulator configured to demodulate the received analog signal.

9. The broadcasting signal receiving apparatus according to one of claim 1 to 8, wherein the controller is further configured to determine whether a width variability of the received broadcasting signal is equal to or greater than a predetermined value.

10. The broadcasting signal receiving apparatus according to one of claim 1 to 9, wherein the controller is further configured to:
in response to the width variability of the received broadcasting signal being equal to or greater than the predetermined value, control the switching section to provide the analog signal to the second demodulator, and
in response to the uniformity of the received broadcasting signal being less than the predetermined value, control the switching section to provide the digital signal to the first demodulator.

11. The broadcasting signal receiving apparatus according to one of claim 1 to 10, wherein the controller is further configured to provide a transport stream processed by the first demodulator to the first signal processor, and provide a composite video blanking sync or source input format broadcasting signal processed by the second demodulator to the second signal processor.

12. A method of controlling a broadcasting signal receiving apparatus, the method comprising:
tuning to a channel of a broadcasting signal comprising a digital signal and an analog signal, and receiving the broadcasting signal corresponding to the tuned channel;
providing the digital signal to the first signal processor and providing the analog signal to the second signal processor, based on a property of the received broadcasting signal; and
processing the digital signal and the analog signal.

13. The method according to claim 12, wherein the property of the broadcasting signal comprises an amplitude of the broadcasting signal.

14. The method according to claim 12 or 13, wherein the providing the broadcasting signal comprises determining whether an amplitude change of the received broadcasting signal is equal to or greater than a predetermined value.

15. The method according to one of claim 12 to 14, wherein the providing the broadcasting signal comprises determining whether a uniformity of the received broadcasting signal is equal to or greater than a predetermined value.
